(19) Europäisches Patentamt

European Patent Office

Office européen des brevets

(11) **EP 0 833 147 A1**

(12) **EUROPÄISCHE PATENTANMELDUNG**

(43) Veröffentlichungstag:
   **01.04.1998 Patentblatt 1998/14**

(51) Int. Cl.$^6$: **G01N 27/12**,  B60H 1/00

(21) Anmeldenummer: 97115307.7

(22) Anmeldetag: **04.09.1997**

(84) Benannte Vertragsstaaten:
   **AT BE CH DE DK ES FI FR GB GR IE IT LI LU MC NL PT SE**

(30) Priorität: **27.09.1996 DE 19640009**

(71) Anmelder: **ROBERT BOSCH GMBH**
   **70442 Stuttgart (DE)**

(72) Erfinder: **Weigold, Thomas**
   **76547 Sinzheim (DE)**

(54) **Schaltungsanordnung zum Ansteuern eines Heizwiderstandes für Gas-Sensoren**

(57)   Die Erfindung bezieht sich auf eine Schaltungsanordnung zum Ansteuern eines Heizwiderstandes für einen Luftgütesensor oder dgl. mit einer an den Heizwiderstand angegelegten Heizspannung. Ein geringer Schaltungsaufwand bei einfacher Auslegung der Schaltung wird dadurch erreicht, daß der Heizwiderstand in einem Spannungsteiler an einem Eingang eines Komparators angeordnet ist und daß die Heizspannung mit einer konstanten Einschaltdauer und einer variablen Ausschaltdauer geregelt ist.

Fig.1

EP 0 833 147 A1

## Beschreibung

### Stand der Technik

Die Erfindung bezieht sich auf eine Schaltungsanordnung zum Ansteuern eines Heizwiderstandes für einen Luftgütesensor oder dgl. mit einer an den Heizwiderstand angelegten Heizspannung.

Bei einer derartigen Schaltungsanordnung, die von der Anmelderin in einer parallelen, nicht vorveröffentlichten Patentanmeldung angegeben ist, wird über einen Komparator ein Ansteuersignal zum Anlegen einer Heizspannung an den Heizwiderstand erzeugt, wobei die Frequenz eines Taktreglers durch Änderung der Ein- und Ausschaltzeiten sich selbst einstellt. Eine Schaltungsanordnung dieser Art wird zum Beispiel in Luftgütesensoren eingesetzt, um Schadstoffe in der Luft zu messen und ein Ausgangssignal zum Auslösen verschiedener Funktionen bereitzustellen. In einer Fahrzeugklimaanlage kann mit dem Ausgangssignal beim Ansteigen einer Kohlenmonoxid-Konzentration oder Stickoxid-Konzentration eine Lüfterklappe von Frischluftzufuhr auf Umluft umgeschaltet werden.

Die Luftgütesensoren besitzen üblicherweise einen Meßwiderstand und einen temperaturabhängigen Heizwiderstand, die thermisch miteinander gekoppelt sind. Der Meßwiderstand ändert seinen Widerstandswert in Abhängigkeit der jeweiligen Schedstoffkonzentration. Um die gewünschte Empfindlichkeit zu erreichen, muß dieser Meßwiderstand auf eine bestimmte Arbeitstemperatur (z.B. 330° C ± 20 K) gebracht werden. Üblicherweise geschieht dies durch den Heizwiderstand, der aus einem Material mit definierten Temperaturkoeffizienten (z.B. Platin) besteht. Durch Anlegen einer Heizspannung an den Heizwiderstand kann über die thermische Kopplung von Heiz- und Meßwiderstand der Meßwiderstand auf seine Arbeitstemperatur gebracht werden. Durch Messung des Widerstandswertes des Heizwiderstands kann dessen Temperatur ermittelt werden; diese kann als Eingangsgröße einer Regelschaltung verwendet werden. Bei bekannten Luftgütesensoren ist die Ansteuerschaltung zum Beheizen des Heizwiderstandes relativ aufwendig.

### Vorteile der Erfindung

Der Erfindung liegt die Aufgabe zugrunde, eine Schaltungsanordnung der eingangs beschriebenen Art bereitzustellen, mit der bei relativ geringem Schaltungsaufwand eine genaue Regelung der Heizspannung erzielt.

Diese Aufgabe wird mit den im Patentanspruch 1 angegebenen Merkmalen gelöst. Hiernach ist also vorgesehen, daß der Heizwiderstand in einem Spannungsteiler an einem Eingang eines Komparators angeordnet ist und daß die Heizspannung mit einer konstanten Einschaltdauer und einer variablen Ausschaltdauer geregelt ist. Mit diesen Maßnahmen ist der Schaltungsaufwand für die Schaltungsanordnung relativ gering, und durch die konstante Einschaltdauer und variable Ausschaltdauer der Heizspannung wird eine stabile, definierte Zwei-Punkt-Regelung erzeugt. Dabei eignen sich die Ausschaltzeiten zur Durchführung gewünschter Messungen.

Der Soll-/Istwertvergleich kann vorteilhaft dadurch ausgeführt werden, daß der Spannungsteiler Teil einer Meßbrücke mit einem weiteren Spannungsteiler bildet, von dem eine Sollspannung abgegriffen und an einen weiteren Eingang des Komparators angelegt ist.

Zu dem einfachen Aufbau der Schaltung trägt die Maßnahme bei, daß die konstante Einschaltdauer mittels eines diskreten Zeitglieds mit einem Widerstand und einem Kondensator oder mittels eines Mikrorechners erzeugt ist, wodurch die Einschaltdauer exakt vorgebbar ist.

Dabei kann der Aufbau mit einfachen Mitteln so ausgeführt sein, daß der Schaltungsteil mit dem diskreten Zeitglied einen Schalttransistor aufweist, der mit seiner Basis an den Widerstand des Zeitglieds angeschlossen ist, dessen Emitter an der Versorgungsspannung liegt und dessen Kollektor mit dem weiteren Eingang des Komparators gekoppelt ist, und daß zwischen dem Kondensator und dem Widerstand des Zeitglieds eine Diode mit ihrer Anode angeschlossen ist, deren Kathode mit dem Emitter des Schalttransistors verbunden ist. Eine geeignete Anordnung besteht dabei darin, daß das diskrete Zeitglied in einen Schaltungsteil zwischen dem Ausgang des Komparators und einer Verbindung zwischen dem weiteren Spannungsteiler geschaltet ist.

Eine alternative Anordnung besteht darin, daß der Schaltungsteil mit dem diskreten Zeitglied einen weiteren Komparator aufweist, dessen mit dem Zeitglied verbundener einer Eingang parallel zu dem Widerstand des Zeitglieds über einen Schalttransistor oder eine Diode an Masse angeschlossen ist, dessen anderer Eingang mit dem weiteren Eingang des Komparators verbunden ist und dessen Ausgang mit dem Ausgang des Komparators verbunden ist und aß der eine Anschluß des Kondensators an dem Knoten des Spannungsteilers angeschlossen ist.

Die Ansteuerung des Heizwiderstandes mit der Heizspannung ist ebenfalls einfach mit der Maßnahme, daß der Ausgang des Komparators an eine Endstufe gekoppelt ist, über die der Heizwiderstand mit der Heizspannung versorgbar ist.

Dabei kann die Kopplung der Endstufe derart ausgeführt sein, daß ein Mikrorechner mit einem Anschluß an den Ausgang des Komparators und mit einem weiteren Anschluß an die Endstufe angeschlossen ist. Dieser Aufbau ist zum Beispiel günstig, wenn für die Durchführung und Auswertung einer Messung ohnehin ein Mikrorechner vorhanden ist.

Die Bereitstellung der Heizspannung für den Heizwiderstand kann mit einfachen Mitteln dadurch erfolgen, daß die Endstufe einen ersten Schalttransistor aufweist, der mit der Basis über einen Widerstand an den Ausgang des Komparators bzw. an den weiteren Anschluß des Mikrorechners, mit seinem Emitter an die Versorgungsspannung und mit seinem Kollektor an dem Heizwiderstand angeschlossen ist, um die Heizspannung bereitzustellen.

Die Erfindung wird anhand eines Ausführungsbeispiels unter Bezugnahme auf die Zeichnungen näher erläutert. Es zeigen:

Fig. 1 ein erstes Ausführungsbeispiel für eine Schaltungsanordnung zum Ansteuern eines Heizwiderstands,

Fig. 2 ein weiteres Ausführungsbeispiel für die Schaltungsanordnung zum Ansteuern eines Heizwiderstandes,

Fig. 2A eine Abwandlung eines Schaltungsteils der Schaltungsanordnung gemäß Fig. 2,

Fig. 3 ein weiteres Ausführungsbeispiel der Schaltungsanordnung zum Ansteuern eines Heizwiderstandes und

Fig. 4 einen zeitlichen Verlauf einer Heizspannung zum Betreiben des Heizwiderstandes.

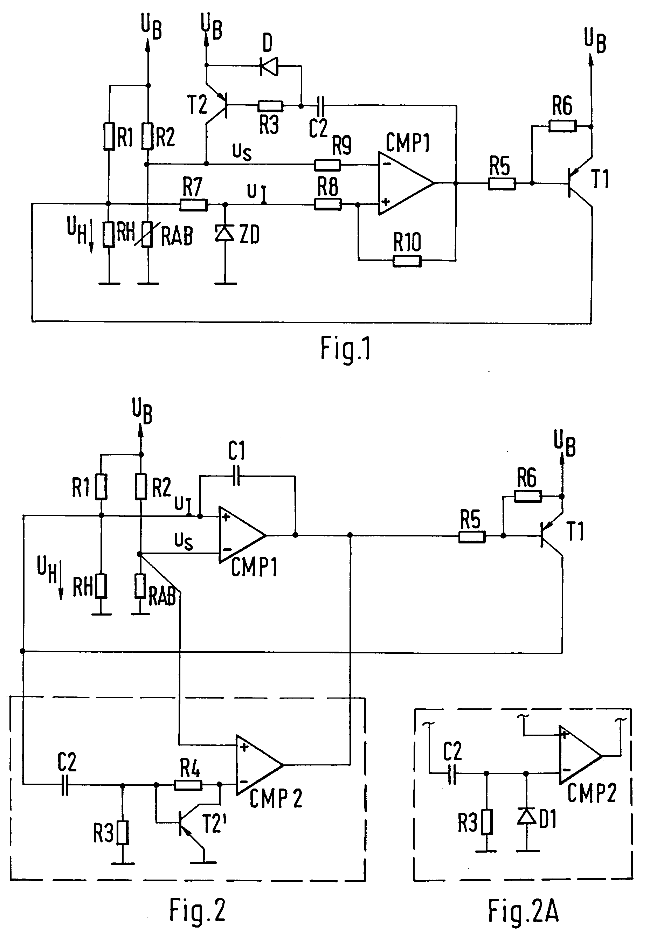

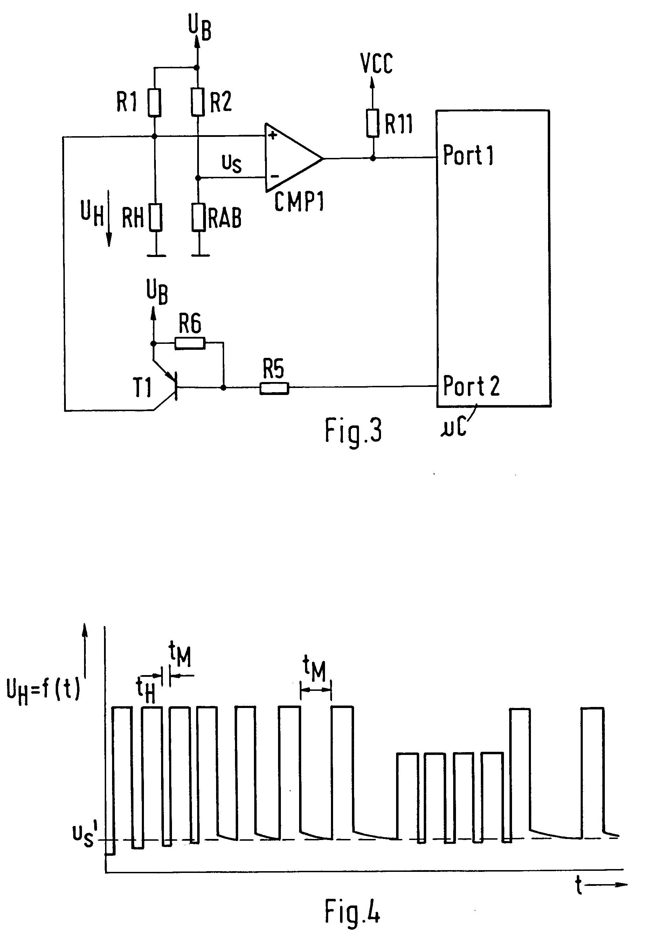

In den Fig. 1, 2 und 2A sind jeweils unterschiedliche Aufbauten einer Schaltungsanordnung zum Ansteuern eines Heizwiderstandes RH in diskreter Ausführung dargestellt, während die Fig. 3 eine Ausführungsform mit einem Mikrorechner $\mu$C zeigt.

Der Heizwiderstand RH bildet einen temperaturabhängigen Widerstand zum Beispiel einer Platinstruktur auf der Heizerseite eines Sensorelements und bildet zusammen mit einem Widerstand R1 einen Spannungsteiler dessen Knoten an den nicht invertierenden Eingang + eines Komparators CMP1 angeschlossen ist, um einen Istwert an den Komparator CMP1 anzulegen. An dem invertierenden Eingang - des Komparators CMP1 ist ein Verbindungsknoten zwischen einem Widerstand R2 und einem Abgleichwiderstand RAB angeschlossen, um einen Sollwert $u_s$ an den Komparator CMP1 anzulegen. Die Widerstände R1 und R2 sind auf ihrer von dem Knoten abgelegenen Seite an eine Versorgungsspannung $U_B$ angeschlossen, während die anderen Anschlüsse des Heizwiderstandes RH und Abgleichwiderstandes RAB an Masse gelegt sind, so daß die Widerstände R1, RH, R2, RAB eine Meßbrücke bilden. Der Komparator CMP1 ist für den Soll-/Ist-Vergleich zuständig.

Am Ausgang des Komparators CMP1 ist eine Endstufe mit einem Transistor T1 angeschlossen, dessen Basis über einen Widerstand R5 mit dem Ausgang des Komparators CMP1 verbunden ist, dessen Emitter an der Versorgungsspannung $U_B$ liegt und dessen Kollektor mit dem Verbindungsknoten des Spannungsteilers R1, RH verbunden ist. Zwischen dem Kollektor des Transistors T1 und der Basis liegt ein Widerstand R6. Bei durchgeschaltetem Transistor T1 ist somit der Heizwiderstand RH an die Versorgungsspannung $U_B$ angelegt und mit einer Heizspannung $U_H$ versorgt.

Zwischen dem Ausgang des Komparators CMP1 und dem invertierenden Eingang - liegt ein Zeitglied mit einem Widerstand R3 und einem Kondensator C2, wobei der eine Eingang des Kondensators C2 an den Ausgang des Komparators CMP1 angeschlossen ist und der eine Anschluß des Widerstandes C3 mit der Basis eines Schalttransistors T2 verbunden ist, dessen Emitter an der Versorgungsspannung $U_B$ und dessen Kollektor an dem invertierenden Eingang - des Komparators CMP1 liegt. Zwischen dem Widerstand R3 und dem Kondensator C2 ist die Anode einer Diode D angeschlossen, deren Kathode am Emitter des Schalttransistors T2 liegt. Mit der so gebildeten Zeitschaltung wird eine feste Einschaltdauer bzw. Heizzeit $t_H$ gebildet. Ein Widerstand R9 am invertierenden Eingang - des Komparators CMP1 schützt den invertierenden Eingang - bei durchgeschaltetem Schalttransistor T2.

Mit Widerständen R8 und R10 wird eine Schalthysterese für den Komparator CMP1 erzeugt, während ein Widerstand R7 und eine Zenerdiode ZD den Istwert bei durchgeschaltetem Transistor T1 begrenzen.

Mit der in Fig. 1 dargestellten Schaltung wird der in Fig. 4 dargestellte Verlauf der Heizspannung $U_H$ in Form einer Zwei-Punkt-Regelung mit konstanter Einschaltdauer $t_H$ von einigen ms, einigen 10 ms oder einigen 100 ms und variabler Ausschaltdauer $t_M$ erzeugt. Beim Einschalten der Endstufe mit dem Transistor T1 wird die Basis des Transistors T2 über das Zeitglied R3, C2 so angesteuert, daß T2 leitend wird, d.h. der Widerstand R2 wird durch die Emitter-Kollektor-Strecke des Transistors T2 überbrückt und damit der Sollwert $u_S$ nach $U_B$ geschaltet. Der Istwert wird durch die Zenerdiode ZD z.B. auf $U_B/2$ begrenzt, so daß der Komparator CMP1 und damit die Endstufe mit T1 eingeschaltet bleibt. Der Kondensator C2 wird jetzt über die Emitter-Basis-Strecke von T2 und dem Widerstand R3 mit der Zeitkonstante R3 x C2 geladen. Hierbei nimmt die Basis-Emitter-Spannung bzw. der Basisstrom von T2 kontinuierlich ab. Nach einer durch R3 und C2 bestimmten Zeit schaltet der Transistor T2 ab, so daß der Sollwert $u_S$ wieder auf seinen ursprünglichen Wert zurückgeht. (Dieser Wechsel des Sollwerts ist in Fig. 4 aus Gründen der Übersichtlichkeit nicht dargestellt.) Da die Endstufe mit Transistor T1 eingeschaltet ist, ist der Sollwert $u_S$ jetzt niedriger als der Istwert, d.h. der Komparator CMP1 und damit die Endstufe schaltet ab. Der Kondensator C2 wird jetzt über die Diode D entladen. Ist die Temperatur des Heizwiderstandes RH niedriger als die Solltemperatur, wird der Komparator CMP1 wieder eingeschaltet, d.h. der Vorgang wiederholt sich. Ist die Temperatur des Heizwiderstandes RH höher als die Solltemperatur, bleibt der Komparator CMP1 so lange ausgeschaltet, bis die Temperatur des Heizwiderstandes RH unterhalb den Sollwert sinkt. Erst dann wird der Komparator CMP1 eingeschaltet und der Vorgang wiederholt sich. Die Zeitdauer vom Abschalten der Endstufe bis zum Absinken der Temperatur des Heizwiderstandes RH unterhalb die Solltemperatur ergibt die variable Ausschaltdauer $t_M$.

In Fig. 4 ist während einer Aufheizphase $t_A$ der Heizwiderstand RH noch nicht auf die Solltemperatur aufgeheizt, so daß zwischen den Einschaltzeiten $t_H$ lediglich minimale Ausschaltzeiten $t_M$ vorliegen, die z.B. durch die Ausschaltzeit des Transistors T1 und Schaltzeiten des Komparators CMP1 gegeben sind. Eine minimale Ausschaltzeit kann z.B. zwischen 10 und 100 µs liegen und reicht aus, eine Messung und gegebenenfalls eine Auswertung des Meßergebnisses vornehmen zu können.

Nach Erreichen der Solltemperatur werden die Ausschaltzeiten $t_M$ entsprechend der Abkühlzeit des Heizwiderstandes RH länger. Sinkt z.B. in einer stationären Phase $t_{st}$ in einem Kfz die Versorgungsspannung $U_B$ ab, so folgen die Einschaltzeiten $t_H$ dichter aufeinander, wie in Fig. 4 ebenfalls dargestellt.

Bei dem in Fig. 2 gezeigten weiteren Ausführungsbeispiel der Schaltungsanordnung ist insbesondere die Zeitschaltung gegenüber dem Ausführungsbeispiel gemäß Fig. 1 abgewandelt, hat aber im Prinzip dieselbe Wirkung. Eine konstante Einschaltdauer wird auch hier über das Zeitglied mit dem Widerstand R3 und dem Kondensator C2 erzeugt. An dem Knoten zwischen dem Kondensator C2 und dem Widerstand R3 ist über einen Widerstand R4 der invertierende Eingang - eines weiteren Komarators CMP2 angeschlossen, dessen nicht invertierender Eingang + mit dem Verbindungsknoten zwischen dem Widerstand R2 und dem Abgleichwiderstand RAB verbunden ist. Der andere Anschluß des Widerstands R3 liegt auf Masse. Parallel zu dem Widerstand R3 ist ein Schalttransistor T2' geschaltet, dessen Basis an der Verbindung zwischen den Widerständen R3, R4 und dem Kondensator C2 angeschlossen ist, dessen Kollektor an dem invertierenden Eingang - des weiteren Komparators CMP2 und dessen Emitter an Masse liegt.

Zwischen dem Ausgang und dem nicht invertierenden Eingang des Komparators CMP1 ist ein Kondensator C1 angeschlossen.

Der Komparator CMP1 und der weitere Komparator CMP2 besitzen jeweils Open-Kollektor-Ausgänge, so daß sich gemäß Fig. 2 eine Wired-Or-Verknüpfung gibt, d.h. wenn mindestens einer der beiden Komparatoren CMP1 oder CMP2 die Endstufe mit dem Transistor C1 freigibt, wird diese eingeschaltet und der Transistor T1 wird leitend und der Heizwiderstand RH wird an $U_B$ geschaltet. Dadurch kann ein Strom durch den Heizwiderstand RH fließen, der dem Heizwiderstand RH Leistung zuführt und diesen aufheizt. Am Heizwiderstand RH liegt dann die Spannung $U_H = U_B - U_{ECSat}$, wodurch der Komparator CMP1 die Endstufe wieder sperren würde. Durch die ansteigende Flanke der Spannung $U_H$ wird der invertierende Eingang - des weiteren Komparators CMP2 hochgezogen und der Ausgang von CMP2 gibt die Endstufe frei. Dadurch entsteht eine Selbsthaltung, d.h. die Endstufe bleibt zunächst eingeschaltet. Der Kondensator C2 wird dann über den Widerstand R3 mit der Zeitkonstanten R3 x C2 geladen. Dadurch sinkt die Spannung am invertierenden Eingang - des weiteren Komparators CMP2. Sobald diese Spannung unter den Sollwert sinkt, wird der Ausgang des weiteren Komparators CMP2 hochohmig, wodurch die Endstufe gesperrt wird. Dadurch ergibt sich eine konstante Einschaltdauer $t_H$. Nach dem Abschalten der Endstufe sinkt die Spannung $U_H$ auf den eigentlichen Istwert, der Kondensator C2 wird über die Basis-Emitter-Diode des Schalttransistors T2' schnell entladen. Am invertierenden Eingang - des weiteren Komparators CMP2 liegt dabei die Basis-Emitter-Sättigungsspannung von T2'.

Eine Abwandlung der in Fig. 2 dargestelten Zeitschaltung ist in Fig. 2A gezeigt, wobei anstelle des Schalttransistors T2' und des Widerstandes R4 eine Diode D1 angeschlossen ist, die mit ihrer Kathode an dem invertierenden Eingang - des weiteren Komparators CMP2 und mit ihrer Anode auf Masse liegt. Diese Schaltung kann vorzugsweise dann verwendet werden, wenn der Komparator mit einer Versorgungsspannung + VCC und -VCC versorgt wird. Bei den üblicherweise verwendeten Komparatoren darf die Eingangsspannung bis maximal ca. 300 mV negativer werden als die Minusversorgung des Komparators, die meist auf Masse liegt. Bei Standard-Dioden liegt die Flußspannung bei ca. 700 mV, während die Collector-Emitter-Sättigungsspannung bei Standard-Transistoren unter 300mV liegt. Daher sollte bei Versorgung des Komparators mit + VCC und Masse die Schaltung mit dem Schalttransistor T2' und R4 verwendet werden.

Sowohl bei der Schaltungsanordnung mit der Zeitschaltung gemäß Fig. 2 als auch mit der Zeitschaltung gemäß Fig. 2A bleibt die Endstufe so lange gesperrt, bis der Istwert (durch Abkühlung des Heizwiderstandes RH) wieder unter dem Sollwert liegt. Danach wiederholt sich der Vorgang, so daß sich der Verlauf der Heizspannung $U_H$ gemäß Fig. 4 einstellt, wie im Zusammenhang mit Fig. 1 beschrieben.

Eine weitere Ausführungsform der Schaltungsanordnung, die prinzipiell die zuvor beschriebene Wirkungsweise erfüllt, ist in Fig. 3 dargestellt. Dabei ist das Zeitglied mit einem Mikrorechner µC gebildet, der mit einem Anschluß Port 1 an den Ausgang des Komparators CMP1 und mit einem zweiten Anschluß Port 2 an den Widerstand R5 der Endstufe mit dem Transistor T1 angeschlossen ist. Auch hierbei wird die in Fig. 4 gezeigte konstante Einschaltdauer der Heizspannung $U_H$ erzeugt, wobei in dem Mikrorechner µC eine entsprechende Software vorgesehen ist. Ein Widerstand R11 stellt einen Pull-up-Widerstand für den Komparator CMP1 dar, der nur bei Open-Kollektor-Ausgang erforderlich ist. Diese Ausführungsform ist insbesondere vorteilhaft, wenn die Schaltungsanordnung zusammen mit einem z.B. für die Messung und Auswertung ohnehin vorhandenen Mikrorechner aufgebaut wird.

Die beschriebenen Schaltungsanordnungen benötigen einen geringen Schaltungsaufwand und entsprechend geringen Platzbedarf auf der Leiterplatte. Dadurch ergeben sich auch Einsparungen hinsichtlich der Materialkosten. Bei Bedarf kann eine große Pulsweite der Heizspannung $U_H$ vorgesehen sein, wenn ein schnelles Hochheizen erwünscht bzw. eine niedrige Betriebsspannung vorhanden ist. Bei der Ausführungsform mit dem Mikrorechner verringert sich der Schaltungsaufwand noch, wobei der Softwareaufwand für den Regelalgorithmus gering ist. Ein AD-Wandler ist nicht erforderlich.

## Patentansprüche

1. Schaltungsanordnung zum Ansteuern eines Heizwiderstandes für einen Luftgütesensor oder dgl. mit einer an den Heizwiderstand angelegten Heizspannung,
dadurch gekennzeichnet,

daß der temperaturabhängige Heizwiderstand (RH) in einem Spannungsteiler (R1, RH) an einem Eingang eines Komparators (CMP1) angeordnet ist und
daß die Heizspannung ($U_H$) mit einer konstanten Einschaltdauer ($t_H$) und einer variablen Ausschaltdauer ($t_M$) geregelt ist.

2. Schaltungsanordnung nach Anspruch 1,
dadurch gekennzeichnet,

daß der Spannungsteiler (R1, RH) Teil einer Meßbrücke mit einem weiteren Spannungsteiler (R2, RAB) bildet, von dem eine Sollspannung (us) abgegriffen und an einen weiteren Eingang des Komparators (CMP1) angelegt ist.

3. Schaltungsanordnung nach Anspruch 1 oder Anspruch 2,
dadurch gekennzeichnet,

daß die konstante Einschaltdauer ($t_H$) mittels eines diskreten Zeitglieds mit einem Widerstand (R3) und einem Kondensator (C2) oder mittels eines Miktrorechners (μC) erzeugt ist.

4. Schaltungsanordnung nach Anspruch 3,
dadurch gekennzeichnet,

daß der Schaltungsteil mit dem diskreten Zeitglied (R3, C2) einen Schalttransistor (T2) aufweist, der mit seiner Basis an den Widerstand (R3) des Zeitglieds (R3, C2) angeschlossen ist, dessen Emitter an der Versorgungsspannung ($U_B$) liegt und dessen Kollektor mit dem weiteren Eingang (-) des Komparators (CMP1) gekoppelt ist, und

daß zwischen dem Kondensator (C2) und dem Widerstand (R3) des Zeitglieds (R3, C2) eine Diode (D) mit ihrer Anode angeschlossen ist, deren Kathode mit dem Emitter des Schalttransistors (T2) verbunden ist.

5. Schaltungsanordnung nach Anspruch 3,
dadurch gekennzeichnet,

daß das diskrete Zeitglied (R3, C2) in einen Schaltungsteil zwischen dem Ausgang des Komparators (CMP1) und einer Verbindung zwischen dem weiteren Spannungsteiler (R1, RH) geschaltet ist.

6. Schaltungsanordnung nach Anspruch 5,
dadurch gekennzeichnet,

daß der Schaltungsteil mit dem diskreten Zeitglied (R3, C2) einen weiteren Komparator (CMP2) aufweist, dessen mit dem Zeitglied (R3, C2) verbundener einer Eingang (-) parallel zu dem Widerstand (R3) des Zeitglieds (R3, C2) über einen Schalttransistor (T2') oder eine Diode (D) an Masse angeschlossen ist, dessen anderer Eingang (+) mit dem weiteren Eingang (-) des Komparators (CMP1) verbunden ist und dessen Ausgang mit dem Ausgang des Komparators (CMP1) verbunden ist und
daß der eine Anschluß des Kondensators (C2) mit dem Knoten des Spannungsteilers (R1, RH) verbunden ist.

7. Schaltungsanordnung nach einem der vorhergehenden Ansprüche,
dadurch gekennzeichnet,

daß der Ausgang des Komparators (CMP1) an eine Endstufe gekoppelt ist, über die der Heizwiderstand (RH) mit der Heizspannung ($U_H$) versorgbar ist.

8. Schaltungsanordnung nach Anspruch 7,
dadurch gekennzeichnet,

daß ein Mikrorechner (μC) mit einem Anschluß (Port 1) an den Ausgang des Komparators (CMP1) und mit einem weiteren Anschluß (Port 2) an die Endstufe angeschlossen ist.

9. Schaltungsanordnung nach Anspruch 7 oder Anspruch 8,
dadurch gekennzeichnet,

daß die Endstufe einen ersten Schalttransistor (T1) aufweist, der mit der Basis über einen Widerstand (R5) an den Ausgang des Komparators (CMP1) bzw. an den weiteren Anschluß (Port 2) des Mikrorechners ($\mu$C), mit seinem Emitter an die Versorgungsspannung ($U_B$) und mit seinem Kollektor an dem Heizwiderstand (RH) angeschlossen ist, um die Heizspannung ($U_H$) bereitzustellen.

Fig.1

Fig.2

Fig.2A

EP 0 833 147 A1

Fig.3

Fig.4

8

Europäisches
Patentamt

**EUROPÄISCHER RECHERCHENBERICHT**

Nummer der Anmeldung

| | EINSCHLÄGIGE DOKUMENTE | | EP 97115307.7 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 6) |
|---|---|---|---|
| A | WO 88/02704 A1 (HÖLTER) 21. April 1988 (21.04.88), Fig. 6. -- | 1 | G 01 N 27/12 B 60 H 1/00 |
| A | DD 261860 A1 (BRENNSTOFFINSTITUT) 09. November 1988 (09.11.88), Fig.. -- | 1 | |
| A | Database WPIL on Questel, Woche 8344, London: Derwent Publications Ltd., AN 83-808096, Klasse J04; & ZA 8206860 A (MONY, P.M.), Zusammenfassung. ---- | 1 | |
| | | | **RECHERCHIERTE SACHGEBIETE (Int. Cl.6)** |
| | | | G 01 N B 60 H G 05 D |

Der vorliegende Recherchenbericht wurde für alle Patentansprüche erstellt.

| Recherchenort | Abschlußdatum der Recherche | Prüfer |
|---|---|---|
| WIEN | 28-11-1997 | NARDAI |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82